# NEW EUROPEAN PATENT SPECIFICATION

(11) **EP 2 344 284 B2**
(45) Date of publication and mention of the opposition decision: **02.10.2019**
(45) Mention of the grant of the patent: 10.08.2016
(21) Application number: 10705292.0
(22) Date of filing: 17.02.2010
(51) Int. Cl.: B09B 3/00, B01D 29/25, B30B 9/06, C02F 11/12

(54) **MACHINE FOR PROCESSING THE ORGANIC FRACTION OF URBAN SOLID WASTE**
MASCHINE ZUR VERARBEITUNG DES ORGANISCHEN TEILS URBANER FESTABFÄLLE
MACHINE DESTINEE A TRAITER LA FRACTION ORGANIQUE DE DECHETS SOLIDES URBAINS

(30) Priority: 26.02.2009 IT TO20090140
(43) Date of publication of application: 20.07.2011
(60) Divisional application: 16177423.7
(73) Proprietor: DB Technologies BV, 7575 EP Oldenzaal (NL)
(72) Inventor: GONELLA, Carlo, 15078 Roccagrimalda (IT)
(74) Representative: Bijvank, Koen Mattijs Lodewiek
(86) International application number: PCT/EP2010/000976
(87) International publication number: WO 2010/097177

(56) References cited:
- EP-A- 1 273 393
- EP-A1- 0 468 852
- EP-A1- 0 468 853
- EP-A1- 0 494 561
- WO-A1-2010/097177
- DE-A1- 2 841 015
- DE-U1- 8 103 406
- FR-A1- 2 615 443
- GB-A- 710 383
- JP-A- S5 533 900
- US-A- 655 048
- US-A- 3 491 682
- US-A- 3 858 504
- US-A- 4 343 233
- US-A- 5 146 848
- US-A1- 2002 134 254
- US-B1- 6 178 882

## Description

The present invention relates to a machine for processing the organic fraction of urban solid waste (USW) deriving from differentiated collection, hereinafter referred to as organic fraction.

As known, with the practice of the differentiated collection the organic fraction of urban solid waste is separed from the remaining, substantially inert fractions. The organic fraction in turn contains a "humid" fraction, which can be recycled, e.g., for production of fertilizers, and a "dry" fraction, i.e., a fraction having a low percentage of water, which can be recycled, e.g., for production of fuel.

EP 1 207 040 describes a machine which compacts urban solid waste by separing the humid fraction from the dry fraction. This machine comprises three perforated cylinders supported on a revolving drum. The drum is driven to rotate by steps, so that each cylinder is cyclically conveyed in front of a loading station, where it receives the material to be compacted from a hopper via an auger, then in front of a compacting station, where a plunger enters the cylinder and squeezes the material contained therein, thereby causing the fluid fraction to be drained through the holes, and finally in front of an unloading station, where a piston pushes the compacted material away from the cylinder.

Since complications rise from processing a very unhomogeneous material such as the USW, which can also contain rigid bodies having a huge size and made of very resistant materials, such as metal, wood, and the like, the machines according to the above-mentioned patent are designed and sized in such a way that they can stand very high pressures and resist to the high abrasive action exerted by the material. However, this circumstance considerably increases the manufacturing costs of the machine, the use of which, consequently, is not advantageous when only the organic fraction of urban solid waste (FORSU), which is by nature a more homogeneous and yielding material, has to be processed.

US 3,858,504 discloses a press for treating household refuse, which comminutes, mixes and moistens the refuse with water, and then feeds the refuse alternately to compression chambers arranged coaxially, in which the refuse is alternately compressed by a double-acting tandem piston. Swinging doors close the tops and bottoms of the compression chambers. Perforated tubes are reciprocably insertable into the refuse in the compression chamber from the side opposite the piston. The extracted liquid sludge is withdrawn through these tubes.

US 3,491,682 discloses a press concentrator for sludge, which has a press housing, a feed funnel, a perforated drum concentrator, a press plunger, a concentrator cone, and discharge means which are provided with holes and are movable into and out of the drum concentrator for discharging the sludge therefrom.

Therefore, it is a main object of the present invention to provide a machine designed and optimized for processing only the organic fraction of urban solid waste by separing the "humid" fraction from the "dry" fraction.

The above object and other advantages, which will better appear from the following description, are achieved by a machine having the features recited in claim 1, while the dependent claims state other advantageous, though secondary features of the invention.

The invention will now be described in more detail with reference to a few preferred, non-exclusive embodiments, shown by way of non-limiting example in the attached drawings, wherein:
Fig. 1 is a plan view of a machine according to the invention;
Fig. 2 is a view in longitudinal cross-section of the machine of Fig. 1;
Figs. 3 to 8 are views similar to Fig. 2, showing the machine in respective six, subsequent operative steps;
Fig. 9 is a plan view of the machine according to an alternative embodiment of the invention;
Fig. 10 is a view in longitudinal cross-section of the machine of Fig. 9;
Figs. 11 to 20 are views similar to Fig. 9, showing the machine in respective ten, subsequent operative steps.

With reference to the above Figures, a machine 10 for processing the organic fraction of urban solid waste comprises a supporting frame 12 supported on feet such as 14, 16. Frame 12 comprises two side members 18,20 which are interconnected at their ends by cross members 22, 24. A structure 26 is arranged in front of one end of frame 12, which also is supported on feet such as 28. A horizontal, perforated tube 30 is axially sandwiched between frame 12 and structure 26 by means of tie rods 32 pulling on frame 12 and structure 26.

Perforated tube 30 has a rectangular profile and is open at both its end facing frame 12, hereinafred referred to as inlet end 30a, and its opposite end facing structure 26, hereinafter referred to as outlet end 30b.

Frame 12 supports a hopper 34 at the bottom of which a loading channel 36 is formed, which is aligned to perforated tube 30 and has the same rectangular profile. Loading channel 36 has an inlet mouth 36a and an outlet mouth 36b which is connected to inlet end 30a of perforated tube 30.

A pressing member 40 is insertable through inlet mouth 36a of channel 36, which has a rectangular profile matching with the profile of perforated tube 30, and is driven by a first hydraulic cylinder 42 supported on frame 12 for progressively entering channel 36 and perforated tube 30, as will be better described below.

Outlet end 30b of perforated tube 30 leads to a vertical duct 44 defined in structure 26, which is open at its lower end.

A shutter 49 is slidably received within duct 44 under control of a hydraulic cylinder 50 for closing outlet end 30b of the perforated tube. Shutter 49 has a sharp edge 49a which is slidable in a scraping relation along the edge of outlet end 30b of perforated tube 30.

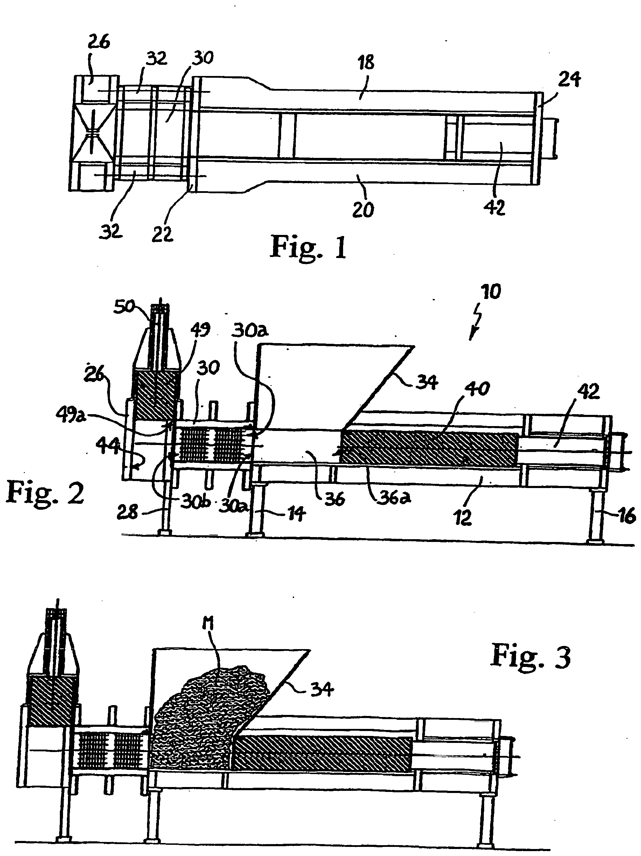

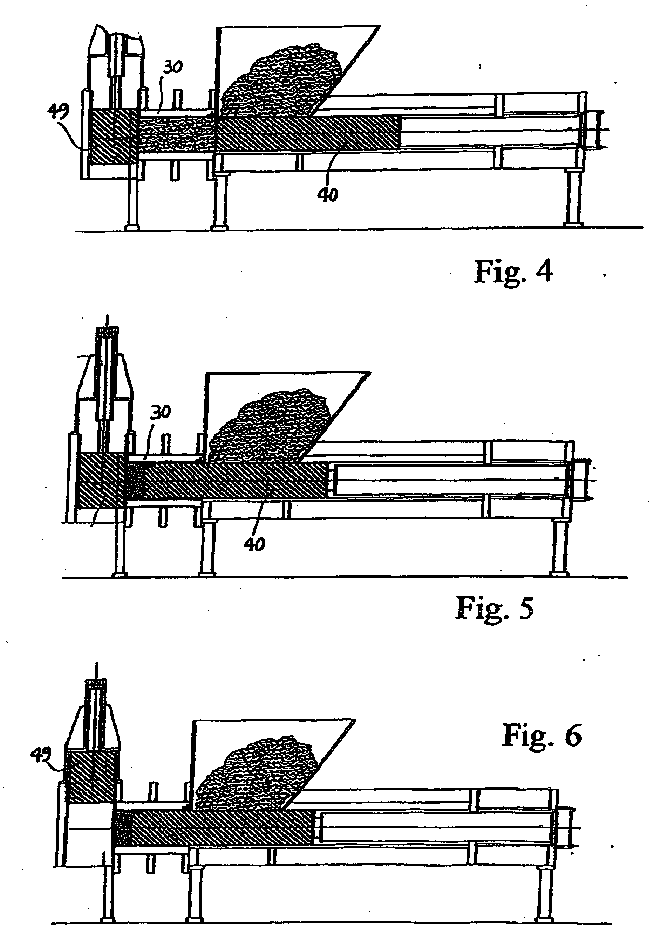

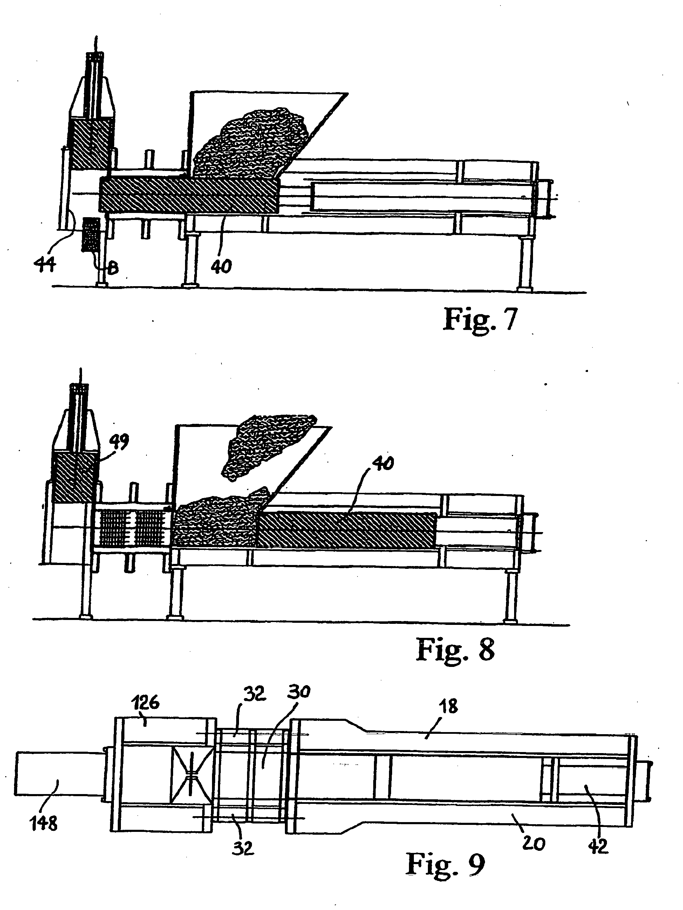

In operation, at the beginning machine 10 is configured as shown in Fig. 2, shutter 49 is lifted and pressing member 40 is withdrawn so that it does not engage channel 36 and perforated tube 30. Then, channel 36 is filled with organic material M to be processed via hopper 34 (Fig. 3). Now, shutter 49 is lowered, thereby closing outlet end 30b of perforated tube 30, and pressing member 40 is moved forward so that it enters channel 36 and pushes the material contained therein into perforated tube 30 (Fig. 4). Then, pressing member 40 is further moved forward so that it enters perforated tube 30 and squeezes the material contained therein, with drainage of the fluid fraction through the holes of the tube (Fig. 5). Now, shutter 49 is lifted (Fig. 6) in order to open outlet end 30b of perforated tube 30, and pressing member 40 is further moved forward, thereby unloading block B made of compacted, "dry" material into vertical duct 44 (Fig. 7). Now, pressing member 40 is withdrawn to the initial, resting position, so that fresh material to be compacted will drop into channel 36 (Fig. 8). In the following cycle, during the lowering of shutter 49, any residuals on the edge of outlet end 30b of perforated tube 30 will be removed by the scraping action exerted by sharp edge 49a of shutter 49.

Of course, the operation of the machine throughout the various, above-described steps can be automatized way by conventional, programmable control systems which will not be described because they fall outside the scope of the invention.

According to an alternative embodiment of the invention as shown in Figs. 9 to 20, the closing of, and the scraping action on, outlet end 30b of perforated tube 30, are performed by two separate components, rather than being both performed by a shutter. The elements unvaried with respect to the previous embodiment will be referred to by the same reference numbers, while those elements which are only similar will be referred to by the same number augmented by 100. In this embodiment, a shutting member 146 aligned to first hydraulic cylinder 42 is horizontally driven by a respective hydraulic cylinder 148, which is supported on a structure 126 arranged in front of frame 12, likewise the previous embodiment, for abutting against outlet end 30a of perforated tube 30 with its front surface.

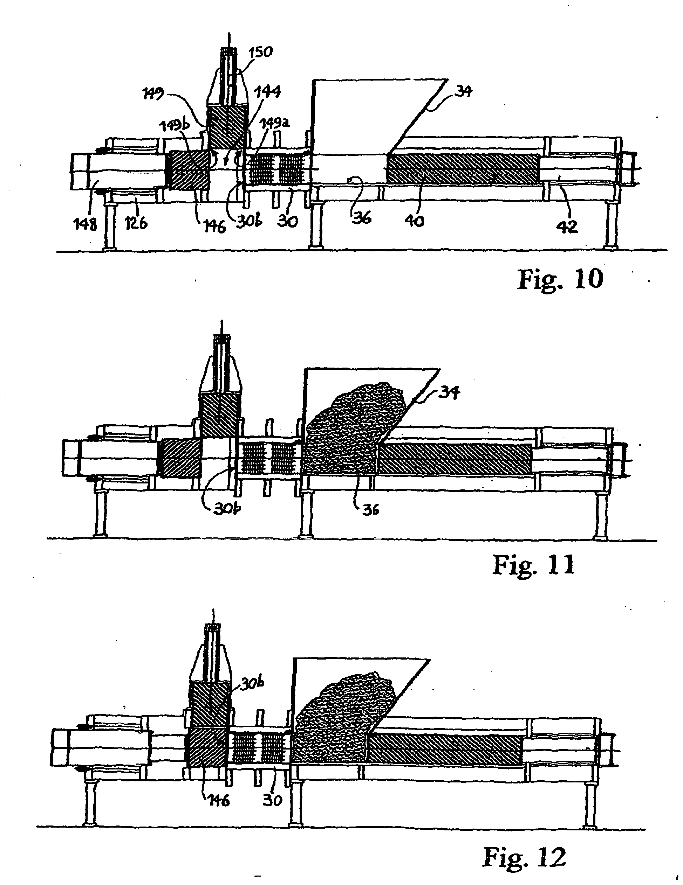

Likewise the previous embodiment, a vertical duct 144 is defined in structure 126, downstream of perforated tube. A guillotine 149 driven by a third hydraulic cylinder 150 is slidable within vertical duct 144, and has a sharp edge 149a which is slidable in a scraping relation along the edge of outlet end 30b of perforated tube 30, as well as an opposite sharp edge 149b which is also slidable in a scraping relation along the front surface of shutting member 146 at its withdrawn, resting position, i.e., at a position which is axially spaced from outled end 30b of perforated tube 30 and does not engage vertical duct 144 (Fig. 10).

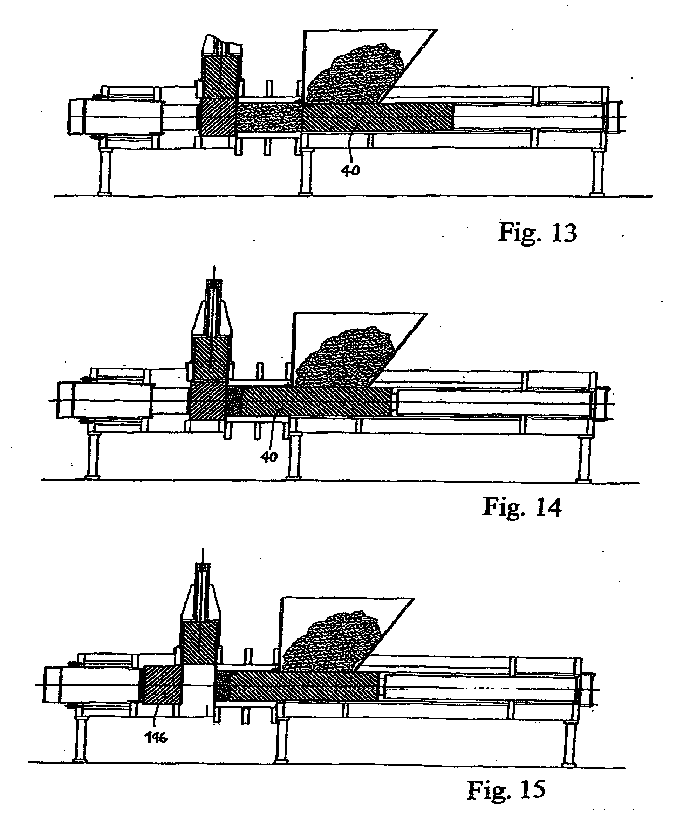

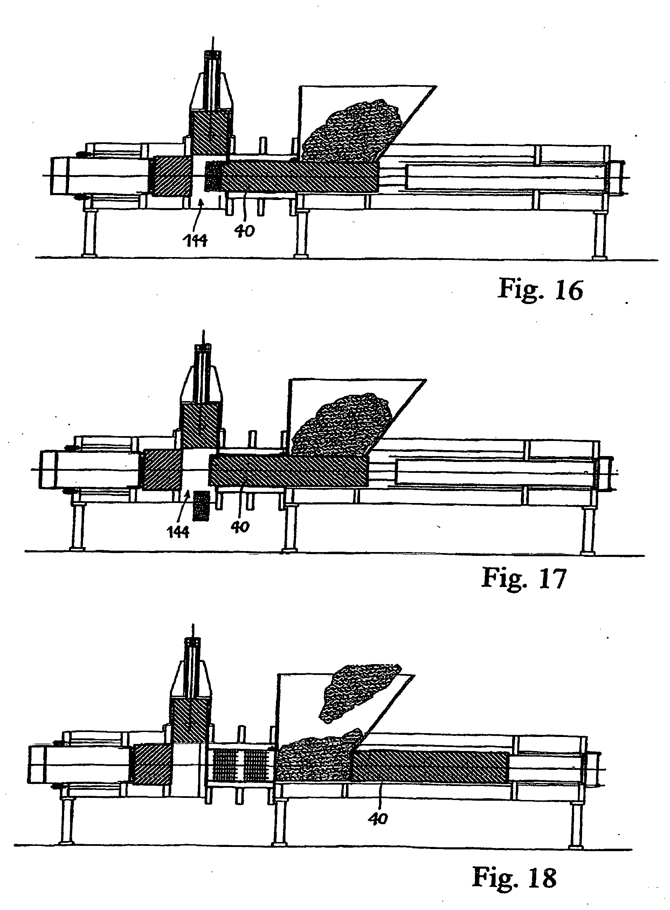

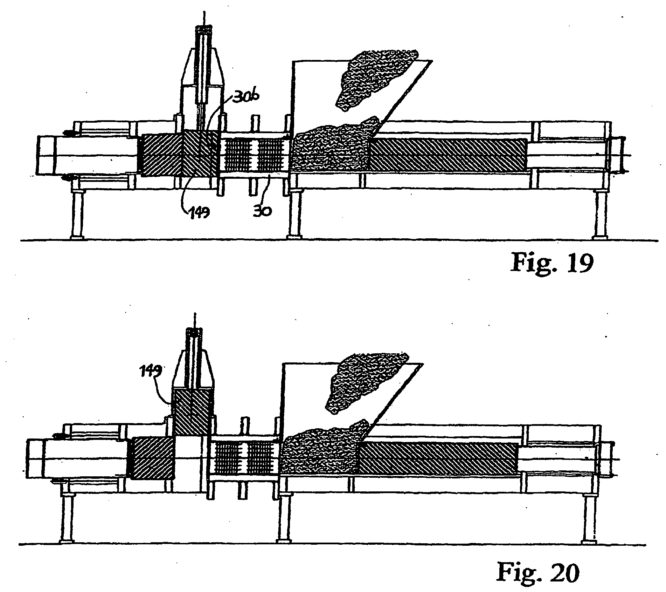

Also with this arrangement, machine 10 is initially configured as shown in Fig. 10, with all the hydraulic cylinder completely withrawn. Likewise the previous embodiment, channel 36 is filled with organic material to be processed via hopper 34 (Fig. 11). Now, shutting member 146 is moved forward up to close outlet end 30b of perforated tube 30 (Fig. 12), and pressing member 40 is moved forward to fill the perforated tube and squeeze the material contained therein, likewise the previous embodiment (Figs. 13, 14). Now, shutting member 146 is withdrawn so that it disengages duct 144 (Fig. 15), and pressing member 40 is further moved forward to push the compacted material into duct 144 (Figs. 16, 17). Now, pressing member 40 is withdrawn to the initial, resting position, so that fresh material to be compacted will drop into channel 36 (Fig. 18). Therafter, guillotine 149 is operated for scraping both the edge of outlet end 30b of perforated tube 30 (Fig. 19) and the surface of shutting member 146, and finally the initial configuration of the machine (Fig. 20) is restored for starting a new cycle.

In the above-described embodiments the various chambers, as well as the slidable elements arranged therein, generally have a rectangular profile, because the operative pressures are relatively low, due to the relative yielding nature of the material under processing, so that it is not necessary to use cylindrical profiles that, as well known to the person skilled in the art, feature a better stress distribution. However, of course it is possible to use different profiles, e.g., polygonal profiles, as well as the above-mentioned cylindrical profile.

## Claims

1. A machine (10) for processing the organic fraction of urban solid waste, which comprises:
- a supporting frame (12),
- a rectilinear channel (36) which is open upwards to be loaded with material to be processed, and has an inlet mouth (36a) and an outlet mouth (36b) at its opposite longitudinal ends,
- a perforated, rectilinear tube (30) which is aligned to said rectilinear channel (36) and has an open inlet end (30a) connected to the outlet mouth (36b) of said horizontal channel (36), as well as an open outlet end (30b),
- shutting means (49, 146) connected to first piston driving means (50, 148), which are operable to close said outlet end (30b) of the perforated tube (30), and
- a pressing member (40) which is slidably insertable through the inlet mouth (36a) of the channel, under control of second piston driving means (42), to progressively enter the channel (36), in such a way as to push the material contained therein into the perforated tube (30) with said shutting means (49, 146) in a closed configuration, in such a way as to squeeze the material with drainage of its humid fraction through the holes in the perforated tube (30),
**characterized in that**
said outlet end (30b) of the perforated tube (30) leads to a duct (44) extending at right angles to the perforated tube, and said shutting means comprise a shutter (49) which is slidably received within said duct (44), and **in that** said pressing member is further controllable to continue its stroke into the perforated tube (30), with said shutter (49) in an open configuration, in such a way as to eject the squeezed material through said outlet end (30b) of the perforated tube, and **in that** said perforated tube (30) and said pressing member (40) have complementary profiles, and **in that** said channel (36) and said pressing member (40) have complementary profiles.

2. The machine of claim 1, **characterized in that** said loading channel (36) is formed at the bottom of a loading hopper (34).

3. The machines of claim 1 or 2, **characterized in that** said shutter (49) has a sharp edge (49a) which is slidable in a scraping relation along the edge of said outlet end (30b) of the perforated tube (30).

4. The machine of any of claims 1 to 3, **characterized in that** said perforated tube (30) is axially sandwiched between said frame (12) and a structure (26) by means of tie rods (32).

## Patentansprüche

1. Eine Maschine (10) zur Verarbeitung der organischen Fraktion von urbanem Festmüll, die Folgendes umfasst:
- einen Stützrahmen (12),
- einen geradlinigen Kanal (36), der nach oben hin offen ist, um mit zu verarbeitendem Material beladen zu werden, und der eine Einlassöffnung (36a) und eine Auslassöffnung (36b) an seinen gegenüberliegenden Längsenden hat,
- ein gelochtes, geradliniges Rohr (30), das mit dem geradlinigen Kanal (36) fluchtet und ein offenes Einlassende (30a) hat, das mit der Auslassöffnung (36b) des horizontalen Kanals (36) verbunden ist, sowie ein offenes Auslassende (30b) hat,
- Verschlussmittel (49, 146), verbunden mit ersten Kolbenantriebsmitteln (50, 148), die betätigt werden können, um das Auslassende (30b) des gelochten Rohrs (30) zu verschliessen, und
- ein Pressglied (40), das gleitend durch die Einlassöffnung (36a) des Kanals, unter der Kontrolle zweiter Kolbenantriebsmittel (42), eingeführt werden kann, um progressiv auf solche Art in den Kanal (36) einzudringen, dass das darin enthaltene Material in das gelochte Rohr (30) geschoben wird, wobei sich die Verschlussmittel (49, 146) in einer geschlossenen Anordnung befinden, derart, dass das Material unter Drainage seiner feuchten Fraktionen durch die Löcher im gelochten Rohr (30) gepresst wird,
**dadurch gekennzeichnet, dass**
das Auslassende (30b) des gelochten Rohrs (30) zu einem Gang (44) führt, der sich in rechten Winkeln zum gelochten Rohr erstreckt, und dass die Verschlussmittel einen Verschluss (49) umfassen, der verschiebbar in dem Gang (44) aufgenommen ist, und dadurch, dass das Pressglied weiter steuerbar ist, um seinen Hub in das gelochte Rohr (30) fortzusetzen, wobei sich der Verschluss (49) in einer offenen Anordnung befindet, derart, dass das gequetschte Material durch das Auslassende (30b) des gelochten Rohrs ausgestossen wird, und dass das gelochte Rohr (30) und das Pressglied (40) komplementäre Profile haben, und dass der Kanal (36) und das Pressglied (40) komplementäre Profile haben.

2. Die Maschine gemäss Anspruch 1, **dadurch gekennzeichnet, dass** der Ladekanal (36) am Boden eines Fülltrichters (34) geformt ist.

3. Die Maschine gemäss Anspruch 1 oder 2, **dadurch gekennzeichnet, dass** der Verschluss (49) eine scharfe Kante (49a) hat, die verschiebbar in einem schabendem Verhältnis entlang der Kante des Auslassendes (30b) des gelochten Rohrs (30) steht.

4. Die Maschine gemäss einem beliebigen der Ansprüche 1 bis 3, **dadurch gekennzeichnet, dass** das gelochte Rohr (30) mit Hilfe von Zugstangen (32) axial zwischen dem Rahmen (12) and einer Struktur (26) eingeschlossen ist.

## Revendications

1. Machine (10) de traitement de la fraction organique d'un déchet solide urbain, qui comprend:
- une armature de support (12),
- un canal rectiligne (36) qui est ouvert vers le haut afin d'être chargé avec un matériau á traiter, et qui posséde une embouchure d'entrée (36a) et une embouchure de sortie (36b) au niveau de ses extrémités longitudinales opposées,
- un tube perforé rectiligne (30) qui est aligné avec ledit canal rectiligne (36) et qui posséde une extrémité d'entrée (30a) reliée á l'embouchure de sortie (36b) dudit canal horizontal (36), ainsi qu'une extrémité de sortie (30b),
- un moyen d'obturation (49, 146) relié á un premier moyen d'entraînement par piston (50, 148), qui est capable de fermer ladite extrémité de sortie (30b) du tube perforé (30), et
- un élément de pression (40) qui peut être inséré par coulissement dans l'embouchure d'entrée (36a) du canal, sous le contrôle d'un second moyen d'entraînement par piston (42), afin d'entrer progressivement dans le canal (36), de façon á pousser le matériau contenu á l'intérieur dans le tube perforé (30) avec ledit moyen d'obturation (49, 146) dans une configuration fermée, de façon á presser le matériau en évacuant sa fraction humide par ies orifices qui se trouvent dans le tube perforé (30),
**caracterisee en ce que**
ladite extrémité de sortie (30b) du tube perforé (30) méne á un conduit (44) qui s'étend á des angles droits par rapport au tube perforé, et ledit moyen d'obturation comprend un obturateur (49) qui est reçu par coulissement dans ledit conduit (44), et **en ce que** ledit élément de pression peut en outre étre commandé afin de poursuivre sa course dans le tube perforé (30), avec ledit obturateur (49) dans une configuration ouverte, de façon á éjecter le matériau pressé par ladite extrémité de sortie (30b) du tube perforé. et **en ce que** ledit tube perforé (30) et ledit élément de pression (40) possédent des profils complémentaires, et **en ce que** ledit canal (36) et ledit élément de pression (40) possédent des profils complémentaires.

2. Machine selon la revendication 1, **caractérisée en ce que** ledit canal de chargement (36) est formé au niveau de la partie inférieure d'une trémie de chargement (34).

3. Machine selon la revendication 1 ou 2, **caractérisée en ce que** ledit obturateur (49) posséde un bord tranchant (49a) qui peut coulisser dans une relation de raclage le long du bord de ladite extrémité de sortie (30b) du tube perforé (30).

4. Machine selon l'une quelconque des revendications 1 á 3, **caractérisée en ce que** ledit tube perforé (30) est axialement pris en sandwich entre ladite armature (12) et une structure (26) á l'aide de tirants (32).
